# EUROPÄISCHE PATENTSCHRIFT

(11) **EP 2 934 967 B1**
(45) Veröffentlichungstag und Bekanntmachung des Hinweises auf die Patenterteilung: **02.01.2019**
(21) Anmeldenummer: 13828911.1
(22) Anmeldetag: 18.12.2013
(51) Int. Cl.: B60T 8/1755, B60T 7/22, B62D 6/00

(54) **VERFAHREN UND VORRICHTUNG ZUM AUTOMATISIERTEN BREMSEN UND LENKEN EINES FAHRZEUGS**
METHOD AND DEVICE FOR THE AUTOMATED BRAKING AND STEERING OF A VEHICLE
PROCÉDÉ ET DISPOSITIF DE FREINAGE ET DE COMMANDE DE DIRECTION AUTOMATISÉS D'UN VÉHICULE

(30) Priorität: 20.12.2012 DE 102012112798; 20.12.2012 DE 102012112799; 10.04.2013 DE 102013103562; 11.04.2013 DE 102013103626
(43) Veröffentlichungstag der Anmeldung: 28.10.2015
(73) Patentinhaber: Continental Teves AG & Co. OHG, 60488 Frankfurt am Main (DE)
(72) Erfinder: STRAUSS, Matthias, 64319 Pfungstadt (DE); PFEIFFER, Juergen, 61479 Glashuetten (DE); LÜKE, Stefan, 61191 Rosbach vor der Höhe (DE)
(86) Internationale Anmeldenummer: PCT/DE2013/200376
(87) Internationale Veröffentlichungsnummer: WO 2014/094772

(56) Entgegenhaltungen:
- EP-A2- 1 418 104
- DE-A1-102004 054 720
- DE-A1-102006 047 131
- DE-A1-102008 003 205
- US-A- 5 332 057
- US-A1- 2005 090 955

## Beschreibung

Fahrerassistenzsysteme, die den Fahrer beim Führen eines Fahrzeugs unterstützen, z.B. ACC, Spurhaltesysteme, Notbrems- und Lenkassistent etc., werden seit einigen Jahren in Serienfahrzeugen umgesetzt. Die Verantwortung für die Fahrzeugführung liegt weiterhin beim Fahrer, er muss zu jeder Zeit aufmerksam sein, um ggf. die Führung des Fahrzeugs zu übernehmen.

Das hochautomatisierte Führen eines Fahrzeugs, d.h. das Fahrzeug fährt autonom und der Fahrer darf seine Aufmerksamkeit auch anderen Tätigkeiten zuwenden, ist noch nicht verbreitet, ist jedoch nach heutigem Stand der Technik möglich. Auch hier ist der automatisierte Brems- und Lenkeingriff von großer Bedeutung.

Ein automatisierter Brems- und/oder Lenkeingriff wird in beiden zuvor genannten Systemtypen in einer kritischen Umfeldsituation insbesondere bei einer drohenden Kollision eingeleitet, und es ist die Aufgabe der hier vorliegenden Erfindung ein verbessertes Verfahren und Vorrichtung zum automatisierten Führen eines Fahrzeugs in einer kritischen Umfeldsituation anzugeben.

Das Fahrzeugumfeld wird von zumindest einem Umfelderfassungssystem, z.B. Radar-, Lidar oder Kamerasensorsystem, einem funkbasierten System, das per Funk Informationen von anderen Verkehrsteilnehmern erhält und ggf. selbst Informationen an andere Verkehrsteilnehmer sendet, oder einem Navigationssystem in Verbindung mit einer elektronischen Karte, überwacht. Eine kritische Umfeldsituation besteht z.B. bei einer Kollisionsgefahr mit einem Umgebungsobjekt. Die Überwachung des Fahrzeugumfeldes gibt ebenfalls Aufschluss darüber, ob die Möglichkeit eines Spurwechsels besteht oder Raum für ein anderes Ausweichmanöver vorhanden ist.

Die Schrift US 5,332,057 offenbart ein Kollisionsvermeidungssystem für ein Fahrzeug, das einen automatisierten Bremseingriff vorsieht. Es wird vorgeschlagen, dass wenn sich während der automatisierten Bremsung eine Umgebungsbedingung verändert, z.B. der Reibbeiwert, ein automatisierter Lenkeingriff zur Kollisionsvermeidung eingeleitet werden kann.

Die Schrift DE 10 2004 054 720 A1 gibt ein Verfahren und eine Vorrichtung zur Kollisionsvermeidung für ein Fahrzeug an. Dazu ist unter anderem vorgesehen, eine Solltrajektorie durch einen Bremseingriff an den Radbremsen zu realisieren. Dabei werden die Radbremsen bei niedrigen Fahrgeschwindigkeiten mit geringen Bremsdrücken selektiv angesteuert. Sobald die geschwindigkeit der relativen seitlichen Annäherung des Fahrzeugs an das Kollisionsobjekt einen vorbestimmten Schwellenwert unterschreitet, wird der automatisierte Lenkeingriff abgebrochen.

Die Offenlegungsschrift DE 10 2006 047 131 A1 beschreibt ein Verfahren zum automatischen Steuern eines Fahrzeugs durch eine Längs- und Querregelung. Es wird ein Vergleich der spätest möglichen Aktionszeitpunkte zwischen Brems- und Ausweichmanövern angegeben.

Erfindungsgemäß wird ein verbessertes Verfahren zum automatisierte Bremsen und Lenken eines Fahrzeugs angegeben. Dazu umfasst das Fahrzeug zumindest ein Sensorsystem zur Erfassung des Fahrzeugumfelds. In Abhängigkeit von einer Relativgeschwindigkeit zu einem Kollisionsobjekt wird die Reihenfolge von einem automatisierten Lenk- bzw. Bremseingriff festgelegt, d.h. ob zunächst ein Bremseingriff und danach ggf. ein Lenkeingriff oder umgekehrt erfolgen soll. Der zweite Eingriff, z.B. nach dem Bremsungseingriff ein Lenkeingriff oder nach dem Lenkeingriff ein Bremseingriff, wird nur dann durchgeführt, wenn trotz des ersten Eingriffs die Kollisionsgefahr weiterhin besteht. Die Erfindung sieht weiterhin vor, dass bei einer Relativgeschwindigkeit unterhalb oder gleich des vorgegebenen Schwellwerts zunächst nur ein automatisierter Bremseingriff erfolgt. In dieser Situation wird zunächst davon ausgegangen, dass eine Kollision mit einem Bremseingriff zu verhindern ist. Sollte dies nicht möglich sein, z.B. weil die Bremskraft des Egofahrzeugs nicht ausreichend ist oder die Relativgeschwindigkeit durch das Kollisionsobjekt unerwartet vergrößert wird oder sich die Position des Kollisionsobjekt verändert, und während des automatisierten Bremseingriffs weiterhin eine Kollisionsgefahr bestehen, wird ein automatisierter Lenkeingriff zum Ausweichen bzw. Spurwechsel eingeleitet. Insbesondere aus dem Abstand zum Kollisionsobjekt und der Breite des Kollisionsobjekts kann das Steuergerät einen Lenkwinkel oder Lenkmoment berechnen, der oder das aufgebracht werden müssen, damit ein Egofahrzeug das Kollisionsobjekt sicher umfahren kann. Alternativ oder zusätzlich wird in einer weiteren Ausgestaltung der Erfindung eine Ausweichtrajektorie für das Egofahrzeug wie zuvor beschrieben berechnet.

In einer bevorzugten Ausgestaltung der Erfindung wird bei einer Relativgeschwindigkeit oberhalb eines vorgegebenen Schwellwerts zunächst ein automatisierter Lenkeingriff zum Ausweichen bzw. Spurwechsel eingeleitet. Falls weiterhin eine Kollisionsgefahr besteht, wird danach eine automatisierte Bremsung ausgeführt. Bei einer hohen Relativgeschwindigkeit zum Kollisionsobjekt wird davon ausgegangen, dass eine Bremsung zur Verhinderung der Kollision nicht ausreichen wird. Insbesondere aus dem Abstand zum Kollisionsobjekt und der Breite des Kollisionsobjekts kann das Steuergerät einen Lenkwinkel oder Lenkmoment berechnen, der oder das aufgebracht werden muß, damit ein Egofahrzeug das Kollisionsobjekt sicher umfahren kann. Als Egofahrzeug wird in dieser Anmeldung das Fahrzeug genannt, das mit einem Verfahren oder einer Vorrichtung gemäß der hier beanspruchten Erfindung ausgestattet ist.
Alternativ oder zusätzlich wird in einer weiteren Ausgestaltung der Erfindung eine Ausweichtrajektorie für das Egofahrzeug berechnet. Insbesondere ist dazu vorgesehen, dass ein Umfelderfassungssensor die Fahrspuren in der Umgebung des Egofahrzeugs erfasst und das Egofahrzeug mittels der berechneten Ausweichtrajektorie gezielt auf eine hindernisfreie Nachbarfahrspur gelenkt wird. Werden keine Fahrspuren oder keine hindernisfreien Fahrspuren erkannt, so führt die Ausweichtrajektorie das Egoahrzeug in einen anderen Freiraum, vorzugsweise auf der Fahrbahn.

Vorzugsweise nimmt der vorgegebene Schwellwert für die Relativgeschwindigkeit einen Wert zwischen 40 und 60 km/h ein. In einer besonderen Ausgestaltung der Erfindung nimmt der Schwellwert einen Wert zwischen 45 und 55 km/h insbesondere zwischen 48 und 52 km/h ein. In einer vorteilhaften Ausführungsform der Erfindung liegt der vorgegebene Schwellwert bei 50km/h.

In einer vorteilhaften Ausgestaltung der Erfindung ist das System zur Umfelderfassung derart ausgelegt, dass eine maximale Relativgeschwindigkeit von bis zu 60 bis 70km/h bestimmt werden kann. Eine derartige Auslegung ist notwendig, damit Relativgeschwindigkeiten bis zu dem vorgegebenen Schwellwert sicher ermittelt werden können.

In einer vorteilhaften Ausgestaltung der Erfindung wird die Relativgeschwindigkeit entweder aus den Erfassungsdaten des zumindest einen Sensorsystems selbst ermittelt, wie es z.B. bei einem Radarsystem möglich ist, oder es wird aus den Erfassungsdaten des zumindest einen Sensorsystems mehrfach ein Abstandswert zu einem möglichen Kollisionsobjekt ermittelt und daraus wird die Relativgeschwindigkeit zum Kollisionsobjekt bestimmt. Bekannte Sensorsysteme zur Abstandsmessung sind z.B. eine Stereokamera, ein Lidar-Radar- oder Ultraschallsensorsystem. Zudem wird die Breite des Kollisionsobjekts aus den Erfassungsdaten des zumindest einen Sensorsystems ermittelt. Die Breite kann z.B. mit der Abstandsinformation aus einem Kamerabild bestimmt werden. Im Stand der Technik sind zudem winkelauflösende Radar- oder Lidarsysteme bekannt, die z.B. nach dem Monopulsverfahren arbeiten. Weiterhin bekannt sind scannende Radar- oder Lidarsysteme, bei dem Fahrzeugumfeld sukzessive in verschiedenen Raumrichtungen abgetastet wird. Alternativ oder zusätzlich zu den zuvor genannten kann ein ortauflösendes Radar- oder Lidarsysteme einen Mehrzahl von Untererfassungsbereiche mit zumindest je einem Sender und Empfänger aufweisen.

In einer bevorzugten Ausgestaltung der Erfindung werden zur Erfassung von Kollisionsobjekten Daten von zumindest zwei verschiedenartigen Sensorsystemen zur Umfelderfassung fusioniert. Dieses Vorgehen erhöht die Sicherheit des automatischen Brems- bzw. Lenkeingriffs, da nur dann ein automatischen Brems- bzw. Lenkeingriff eingeleitet wird, wenn beide Sensorsysteme das Kollisionsobjekt erkannt haben. Zudem können die Größen Abstand, Relativgeschwindigkeit und Breite des Kollisionsobjektsmit mit einer größeren Genauigkeit bestimmt werden.

Eine vorteilhafte Ausgestaltung der Erfindung sieht deshalb vor, dass aus den Erfassungsdaten eines Radarsensorsystems Abstand und Relativgeschwindigkeit zu einem möglichen Kollisionsobjekt bestimmt werden. Ein Radarsystem kann die Relativgeschwindigkeit direkt messen. Ein zeitlicher Versatz wie er z.B. bei der Bestimmung der Relativgeschwindigkeit aus einer Mehrzahl von nacheinander erfassten Abstandswerten typisch ist, entfällt. Aus den Erfassungsdaten eines Kamerasensorsystems wird die Breite und insbesondere die Art des Kollisionsobjekts bestimmt. Mit der Abstandsinformation kann die Breite eines Objekts bei Kenntnis der Abbildungseigenschaften des Kamerasystems relativ genau bestimmt werden. Ein weiterer Vorteil des Kamerasensorsystems ist es, dass die Art des Objekts, z.B, PKW, Motorrad, LKW, Mauer etc. aus einem Kamerabild, z.B. mit der Methode der Mustererkennung (pattern recognition) bestimmt werden kann.
In einer besonderen Ausgestaltung der Erfindung wird in Abhängigkeit von einer Konfidenz eines Signals des Sensorsystem zur Erfassung des Fahrzeugumfelds bzw. einer Konfidenz der erkannten Objekte die Stärke des Bremseingriffs oder des Lenkeingriffs begrenzt. Die Konfidenz ist insbesondere ein Maß für die Sicherheit oder Verlässlichkeit mit der ein Fahrzeugumfeld richtig erkannt wurde. Eine fehlerhafte Erkennung kann in einer fehlerhaften Funktion des Umfelderfassungssystems selbst begründet sein, die z.B. durch eine Verschmutzung oder extreme Umgebungsbedingungen (Erschütterungen, Kälte, Hitze, starke Temperaturschwankungen) hervorgerufen wird, oder dem Ausfall einer Komponente des Umfelderfassungssystems geschuldet sein.

Eine bevorzugt Ausgestaltung der Erfindung sieht vor, dass die Stärke des Bremseingriffs oder des Lenkeingriffs in Abhängigkeit von der Zeitspanne seit einer ersten Detektion eines potentiellen Kollisionsobjekts bestimmt wird. Insbesondere wenn ein Objekt erst seit einer kurzen Zeit, die kleiner als ein vorgebbarer Schwellwert ist, detektiert wird, wird die Stärke des Bremseingriffs oder des Lenkeingriffs auf einen maximalen Wert begrenzt. Die Stärke des Bremseingriffs wird z.B. in dieser Situation insbesondere auf einen Wert zwischen 2 und 4 m/s2, z.B. 3 m/s2, begrenzt.

Eine positive Ausgestaltung der Erfindung sieht vor, dass die Konfidenz in Abhängigkeit von einer Signalvarianz, d.h. einem Maß für die Größe der Abweichung der Werte von einem Mittelwert, bestimmt wird. Die Signalvarianz ist insbesondere ein Maß dafür, ob z.B. ein potentielles Kollisionsobjekt, in den Eingangsdaten dauerhaft sichtbar ist oder nur punktuell. Letzteres kann auf eine Falschdetektion hindeuten. Insbesondere wenn z.B. ein potentielles Kollisionsobjekt nur punktuell detektiert wird, die Signalvarianz also hoch ist, wird das Verzögerungsmaß auf einen maximalen Wert begrenzt. Die Stärke des Bremseingriffs wird in dieser Situation insbesondere auf einen Wert zwischen 2 und 4 m/s2, z.B. 3 m/s2, begrenzt.

In einer weiteren Ausgestaltung der Erfindung wird in Abhängigkeit von der Konfidenz ein oberer Schwellwert für die Stärke des Bremseingriffs bestimmt. In einer bevorzugten Ausgestaltung der Erfindung wird der obere Schwellwert für die Stärke des Bremseingriffs vorzugsweise bei niedrigen Konfidenzwerten niedrig gewählt, d.h. das Verzögerungsmaß ist auf niedrige Werte unterhalb des Schwellwerts limitiert. Ist die Konfidenz hoch, so wird vorzugsweise ein hoher Schwellwert gewählt, der die die Stärke des Bremseingriffs limitiert.

Eine weitere Ausgestaltung der Erfindung sieht vor, dass bei einer sich im Laufe der Zeit erhöhenden Konfidenz die Stärke des Bremseingriffs kontinuierlich oder in Stufen daran angepasst wird. Es wird insbesondere erst bei einer zunehmenden Signalgüte bzw. bei Überschreitung eines vorgegebenen Wertes für die Signalkonfidenz eine nicht begrenzte Verzögerung bis hin zur Vollbremsung eingeleitet. Der Übergang von einer begrenzten Verzögerung zu einer nicht begrenzten Verzögerung erfolgt vorzugsweise linear oder in Stufen.

Die Erfindung umfasst zudem ein Steuergerät zur Steuerung eines automatisierten Brems- und Lenkeingriffs eines Fahrzeugs. Das Steuergerät umfasst eine Speichereinheit, auf der ein Verfahren wie zuvor beschrieben hinterlegt ist, und eine Prozessoreinheit, zur Durchführung eines Verfahrens wie zuvor beschrieben. Das Steuergerät ist mit dem zumindest einen Sensorsystem zur Umfelderfassung verbunden. Zudem ist das Steuergerät mit Bremsen und Lenkung eines Fahrzeugs verbindbar.

## Patentansprüche

1. Verfahren zum automatisierten Bremsen und Lenken eines Fahrzeugs, wobei zumindest ein Sensorsystem zur Erfassung des Fahrzeugumfelds, d.h. zur Erfassung von möglichen Kollisionsobjekten und einer Relativgeschwindigkeit, vorgesehen ist, wobei in Abhängigkeit von einer Relativgeschwindigkeit zu einem Kollisionsobjekt festgelegt wird, ob ein automatisierter Lenkeingriff oder Bremseingriff eingeleitet wird,
**dadurch gekennzeichnet, dass**
bei einer Relativgeschwindigkeit unterhalb eines vorgegebenen Schwellwerts zunächst ein automatisierter Bremseingriff erfolgt und falls trotz Einleitung des automatisierten Bremseingriffs weiterhin eine Kollisionsgefahr besteht, ein automatisierter Lenkeingriff zum Ausweichen bzw. Spurwechsel eingeleitet wird.

2. Verfahren nach Anspruch 1,
**dadurch gekennzeichnet, dass**
bei einer Relativgeschwindigkeit oberhalb eines vorgegebenen Schwellwerts zunächst ein automatisierter Lenkeingriff zum Ausweichen bzw. Spurwechsel erfolgt und danach falls weiterhin eine Kollisionsgefahr besteht, eine automatisierte Bremsung eingeleitet wird.

3. Verfahren nach Anspruch 2,
**dadurch gekennzeichnet, dass**
der vorgegebene Schwellwert einen Wert zwischen 40 und 60 km/h oder zwischen 45 und 55 km/h einnimmt.

4. Verfahren nach Anspruch 2,
**dadurch gekennzeichnet, dass**
der vorgegebene Schwellwert einen Wert zwischen 48 und 52 km/h einnimmt oder der vorgegebene Schwellwert 50km/h beträgt.

5. Verfahren nach einem der vorherigen Ansprüche
**dadurch gekennzeichnet, dass**
die Relativgeschwindigkeit und Breite eines Kollisionsobjekts aus Daten des zumindest einen Sensorsystems ermittelt werden.

6. Verfahren nach einem der vorherigen Ansprüche
**dadurch gekennzeichnet, dass**
zur Erfassung eines Kollisionsobjekts Daten von zumindest zwei verschiedenartigen Sensorsystemen zur Umfelderfassung fusioniert werden.

7. Verfahren nach Anspruch 6, **dadurch gekennzeichnet, dass**
aus den Erfassungsdaten eines Radarsensorsystems Abstand und Relativgeschwindigkeit zu einem möglichen Kollisionsobjekt und aus den Erfassungsdaten eines Kamerasensorsystems Breite und insbesondere die Art des Kollisionsobjekts bestimmt werden.

8. Verfahren nach einem der vorherigen Ansprüche,
**dadurch gekennzeichnet, dass**
in Abhängigkeit von einer Konfidenz eines Signals des Sensorsystem zur Erfassung des Fahrzeugumfelds bzw. der Objektdaten die maximale Stärke des Bremseingriffs oder des Lenkeingriffs begrenzt wird.

9. Steuergerät zur Steuerung eines automatisierten Brems- und Lenkeingriffs eines Fahrzeugs, das
- mit zumindest einem Sensorsystem zur Erfassung des Fahrzeugumfelds, einer Bremseinheit und einer Lenkungseinheit in einem Fahrzeug verbindbar ist und
- eine Speichereinheit, auf der ein Verfahren nach einem der vorherigen Ansprüche hinterlegt ist, und
- eine Prozessoreinheit, zur Durchführung eines Verfahrens nach einem der vorherigen Ansprüche, umfasst.

10. Steuergerät nach Anspruch 9, das mit zumindest einem System zur Umfelderfassung verbindbar ist, wobei das System zur Umfelderfassung derart ausgelegt ist, dass eine Relativgeschwindigkeit von bis zu 70km/h bestimmt werden kann.

## Claims

1. A method for the automated braking and steering of a vehicle, wherein at least one sensor system for detecting the vehicle's surroundings, i.e. for detecting possible collision objects and a relative speed, is provided, wherein it is specified based on a relative speed towards a collision object whether an automated steering intervention or braking intervention is initiated,
**characterised in that**
an automated braking intervention is initially effected at a relative speed below a predefined threshold and if a collision risk still exists despite the initiation of the automated braking intervention, an automated steering intervention is initiated in order to make an avoiding manoeuvre or a lane change.

2. The method according to Claim 1,
**characterised in that**
an automated steering intervention is initially effected at a relative speed above a predefined threshold in order to make an avoiding manoeuvre or a lane change and then, if a collision risk still exists, automated braking is initiated.

3. The method according to Claim 2,
**characterised in that**
the predefined threshold assumes a value between 40 and 60 km/h or between 45 and 55 km/h.

4. The method according to Claim 2,
**characterised in that**
the predefined threshold assumes a value between 48 and 52 km/h or the predefined threshold is 50km/h.

5. The method according to any one of the preceding claims,
**characterised in that**
the relative speed and width of a collision object are established from data of the at least one sensor system.

6. The method according to any one of the preceding claims,
**characterised in that**
data from at least two different types of sensor system for detecting the surroundings are fused in order to detect a collision object.

7. The method according to Claim 6,
**characterised in that**
the distance from and relative speed towards a possible collision object are determined from the detection data of a radar sensor system, and the width and, in particular, the nature of the collision object are determined from the detection data of a camera sensor system.

8. The method according to any one of the preceding claims,
**characterised in that**
the maximum strength of the braking intervention or the steering intervention is limited based on a confidence of a signal of the sensor system for detecting the vehicle's surroundings or the object data.

9. A control device for controlling an automated braking and steering intervention of a vehicle, which
- is connectable to at least one sensor system for detecting the vehicle's surroundings, a braking unit and a steering unit in a vehicle, and comprises
- a storage unit on which a method according to any one of the preceding claims is stored, and
- a processor unit for carrying out a method according to any one of the preceding claims.

10. The control device according to Claim 9,
which is connectable to at least one system for detecting the surroundings, wherein the system for detecting the surroundings is designed such that a relative speed of up to 70km/h can be determined.

## Revendications

1. Procédé de freinage et de braquage automatiques d'un véhicule, où est prévu au moins un système de capteur pour la détection de l'environnement du véhicule, autrement dit pour la détection de possibles objets de collision et d'une vitesse relative, où l'application d'une manoeuvre de freinage et de braquage automatique est déterminée en fonction d'une vitesse relative par rapport à un objet de collision,
**caractérisé**
**en ce qu'**en cas de vitesse relative inférieure à une valeur seuil définie, une manoeuvre de freinage automatique est d'abord effectuée, et **en ce que** si, malgré l'application de la manoeuvre de freinage automatique, un risque de collision persiste, une manoeuvre de braquage automatique est appliquée pour un évitement ou un changement de voie.

2. Procédé selon la revendication 1,
**caractérisé**
**en ce qu'**en cas de vitesse relative supérieure à une valeur seuil définie, une manoeuvre de braquage automatique est d'abord effectuée pour un évitement ou un changement de voie, et **en ce que** si un risque de collision persiste après celle-ci, une manoeuvre de freinage automatique est appliquée.

3. Procédé selon la revendication 2,
**caractérisé**
**en ce que** la valeur seuil définie est comprise entre 40 et 60 km/h ou entre 45 et 55 km/h.

4. Procédé selon la revendication 2,
**caractérisé**
**en ce que** la valeur seuil définie est comprise entre 48 et 52 km/h ou **en ce que** la valeur seuil définie est de 50km/h.

5. Procédé selon l'une quelconque des revendications précédentes,
**caractérisé**
**en ce que** la vitesse relative et la largeur d'un objet de collision sont déterminées sur la base des données dudit au moins un système de capteur.

6. Procédé selon l'une quelconque des revendications précédentes,
**caractérisé**
**en ce que** pour la détection d'un objet de collision, des données d'au moins deux systèmes de capteur différents pour la détection d'environnement sont fusionnées.

7. Procédé selon la revendication 6,
**caractérisé**
**en ce que** la distance et la vitesse relative par rapport à un possible objet de collision sont déterminées à partir des données de détection d'un système de capteur radar, et la largeur et en particulier la nature de l'objet de collision sont déterminées à partir des données de détection d'un système de capteur de caméra.

8. Procédé selon l'une quelconque des revendications précédentes,
**caractérisé**
**en ce que** l'intensité maximale de la manoeuvre de freinage ou de la manoeuvre de braquage est limitée en fonction de la fiabilité d'un signal du système de capteur pour la détection de l'environnement du véhicule ou des données d'objet.

9. Appareil de commande pour la commande d'une manoeuvre de freinage et de braquage automatique d'un véhicule, lequel
- peut être relié à au moins un système de capteur pour la détection de l'environnement du véhicule, à une unité de frein et à une unité de direction dans un véhicule, et comprend
- une unité de mémoire où est stocké un procédé selon l'une quelconque des revendications précédentes,
- ainsi qu'une unité de processeur pour l'exécution d'un procédé selon l'une quelconque des revendications précédentes.

10. Appareil de commande selon la revendication 9,
lequel peut être relié à au moins un système de capteur pour la détection de l'environnement d'un véhicule, ledit système pour la détection d'environnement étant conçu de manière à permettre la détermination d'une vitesse relative jusqu'à 70km/h.
